# EUROPÄISCHE PATENTANMELDUNG

(11) **EP 1 772 940 A2**
(43) Veröffentlichungstag der Anmeldung: **11.04.2007**
(21) Anmeldenummer: 06019747.2
(22) Anmeldetag: 21.09.2006
(51) Int. Cl.: H02J 5/00

(54) **Rotierübertrager zur Übertragung von elektrischer Energie oder Information**

(30) Priorität: 04.10.2005 DE 102005047525; 05.12.2005 DE 102005058104
(71) Anmelder: Prüftechnik Dieter Busch AG, 85737 Ismaning (DE)
(72) Erfinder: Förtsch, Ralf, 85356 Freising (DE); Mühleisen, Werner, 81671 München (DE); Hoelzl, Roland, 81369 München (DE)

(57) **Zusammenfassung**

Die Vorrichtung zur effizienten Übertragung von elektrischer Energie und/oder Information ist nach Art eines Ringübertrages oder Drehtransformators gebaut. Die Kerne dieser Vorrichtung bestehen aus ferromagnetischen Ringen mit U-förmigem Querschnitt aus Weicheisen, oder Weicheisen-Blechpaketen von ring- oder hohlzylindrischer Form, wobei die ring- oder hohlzylindrischen Bleche typischerweise ungeschlitzt sind. - Es können mehrere Spulensätze innerhalb einer solche Vorrichtung vorgesehen sein; auf diese Weise können mehrere Kanäle zur parallelen Übertragung von elektrischer Energie und/oder Information bereitgestellt werden.

## Beschreibung

Die vorliegende Erfindung betrifft einen Rotierübertrager zur gleichzeitigen und/oder wahlweisen Übertragung von elektrischer Energie oder Information.

Weiterhin betrifft die Erfindung ein Verfahren zur gleichzeitigen und/oder wahlweisen Übertragung von elektrischer Energie oder Information mittels eines solchen Rotierübertragers.

Ein solcher Rotierübertrager, im folgenden lediglich als Übertrager bezeichnet, ist bekannt aus der DE 102 34 893. Dieser Übertrager ist dazu vorgesehen, Verwendung insbesondere bei Rundstrickmaschinen zu finden. - Ein weiterer Übertrager dieser Art ist bekannt aus der US 5,272,350 und wird bevorzugt im Zusammenhang mit Ölbohr-Systemen verwendet. - Andere Übertrager dieser Art werden seit längerer Zeit im Zusammenhang mit nichtdestruktiv arbeitenden Testsystemen (NDT-Systemen) verwendet.

Alle diese Systeme legen Wert auf eine effiziente Übertragung von Energie und/oder Informationen. Aus diesem Grunde wird als Magnetmaterial für die betreffenden Übertragerkerne typischerweise ein Ferritmaterial verwendet. Allerdings hat sich die Verwendung von Ferritmaterial für NDT-Systeme als problembehaftet herausgestellt, unter anderem aufgrund der Einsatzbedingungen im rauhen Industrieumfeld. Aufgabe der Erfindung ist es daher, einen leistungsstarken, auch mehrkanaligen Übertrager für elektrische Energie und/oder Informationen bereitzustellen, welcher zur Verwendung in NDT-Systemen besser geeignet ist als herkömmliche Übertrager auf Basis von Ferritkernmaterial.

Diese Aufgabe wird gelöst durch eine Übertrageranordnung gemäß den unabhängigen Patentansprüchen.

Die Erfindung sieht vor, auf Ferritmaterial zu verzichten und Übertrager-Kerne auf Basis von Stahl oder Transformatoreisen in einer unkonventionellen Anordung und geometrischen Konfiguration zu verwenden. Insbesondere wird durch die erfindungsgemäße Lösung vorgesehen, eine Anordnung von aufeinandergeschichteten, gegebenenfalls voneinander isolierten ferromagnetischen Ringen als Kern oder Kernhälfte für einen Übertrager vorzusehen, oder eine Anordnung von ineinandergesteckten, gegebenenfalls voneinander isolierten ferromagnetischen Hohlzylindern als Kern für einen Übertrager vorzusehen. Die genannten Ringe und Kerne sind dabei bevorzugt ungeschlitzt, um drehwinkelabhängige Variationen des magnetischen Widerstandes solcher Übertrager zu verhindern, was die Übertragung von Informationen deutlich verbessert. - Die sog. Figurenachse dieser Ringe oder Hohlzylinder soll dabei mit der Figurenachse einer zugehörigen Primär- oder Sekundärspule koinzidieren. - Eine solche Anordnung mit ungeschlitzten Ringen oder Hohlzylindern wird im normalerweise aus folgender Betrachtungsweise heraus nicht verwendet: Aufgrund der koaxialen Anordnung von Primär- bzw. Sekundärspule und den ungeschlitzten Ringen oder Hohlzylindern ist ein Auftreten von unerwünschten und wirkungsgradmindernden Sekundärströmen in solchen Anordnungen zu vermeiden. Gemäß der Erfindung erzeugt eine solche Anordnung jedoch überraschenderweise nur vertretbaren bis geringen Energieverlust und hat in anderen Eigenschaften erhebliche Vorteile. Die Erfindung ist damit, insgesamt betrachtet, deutlich vorteilhafter als vorher bekannte Anordnungen und Problemlösungen.

Neben der bevorzugten Ausgestaltung der Erfindung mit ungeschlitzten Ringen und Hohlzylindern ist eine weitere Ausgestaltung vorgesehen, welche geschlitzte Ringe oder Hohlzylinder vorsieht, wobei die zugehörigen Schlitze im wesentlichen in radialer Richtung der entsprechenden Figurenachsen verlaufen. Außerdem ist eine Ausgestaltung vorgesehen, bei welcher die genannten Ringe oder Hohlzylinder sich aus einer Mehrzahl von aneinandergereihten ferromagnetischen Übertrager-Kernteilen zusammensetzen.

Die Erfindung wird im Folgenden anhand der Zeichnung beschrieben.

Es zeigt:
- Fig. 1: einen schematischen Querschnitt durch eine erste Hälfte eines Übertragers bestehend aus Träger, Kern und Spule
- Fig. 2: einen schematischen Querschnitt durch eine Anordung einer ersten und einer zweiten Häfte eines Übertragers
- Fig. 3: ein Detail aus Fig. 1
- Fig. 4: einen Querschnitt durch eine ähnliche Übertrager-Anordnung mit horizontal geschichteten, ringförmigen Kernblechen
- Fig. 5: einen Querschnitt durch eine ähnliche Übertrager-Anordnung mit vertikal geschichteten Kernblechen mit hohlzylindrischer Form

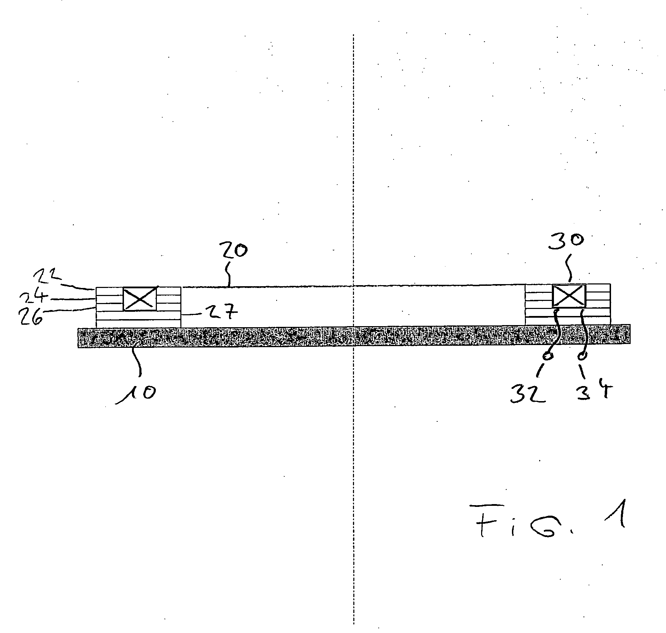

Wie in Fig. 1 gezeigt, besteht eine erste Hälfte eines erfindungsgemäßen Übertragers eine z.B. unmagnetische oder nicht-metallische plattenförmige Basis 10 und einem ferromagnetischen Kern 20, welcher aus einem Satz Kern-Bleche 22, 24, 26, 27 usw. von kreisringförmiger Gestalt besteht. Die Kern-Bleche sind nicht aus Ferrit, sondern aus Stahlblech, bevorzugt aus sog. Trafoblech, oder anderem Massiv-Weicheisen-Material gefertigt. Die in der Fig. 1 gezeigte Zahl Kern-Bleche ist lediglich als Beispiel zu verstehen, es können auch weitaus mehr Bleche verwendet werden, oder auch deutlich weniger. Zur Aufnahme einer Spule 30 von relativ großem Durchmesser/Längen-Verhältnis, und mit relativ großem Innendurchmesser, bestehen die Kern-Bleche 22, 24 und 26 usw. aus je einem äußeren (Kreis-)Ring und einem radial innenliegenden (Kreis-)Ring. Die Spule 30 ist gegen den Kern 20 elektrisch isoliert. Die Anschlüsse 32, 34 der Spule 30 können wie gezeigt durch Bohrungen (36, 37, Fig. 3) innerhalb des Kerns 20 und der Basis 10 nach außen geführt sein.

Wie in Fig. 2 gezeigt, besteht ein kompletter Übertrager aus einer ersten, festehenden Hälfte 10 und einer relativ zu diesem verdrehbare Hälfte. Die verdehbare Hälfte besteht aus Basis 110 und Kern 120 mit Kern-Blechen 122 usw. sowie der Spule 130. - Die Verdrehung der Hälfte 110 findet relativ zur Figurenachse 140 statt. Die Figurenachsen von Hälften 10 und 110 sind zweckmäßigerweise parallel gerichtet und koinzidieren im Idealfalle. Die erste und die zweite Hälfte sind bevorzugt völlig vergleichbar aufgebaut. Der Luftspalt zwischen den Kernen 20, 120 wird nach praktischen Gegebenheiten dimensioniert und ist typischerweise relativ klein. Die induktive Kopplung zwischen erster und zweiter Spule 30, 130 wird also im wesentlichen durch den magnetischen Fluß in den Kernen 20, 120 bewirkt, welcher in an sich bekannter Weise die Spulen toroidförmig umschließt. Auf diese Weise kann eine Wechselspannung zur Übertragung von Information oder elektrischer Energie von z.B. den Anschlüssen 32, 34 auf die Anschlüsse 132, 134 kontaktlos transferiert werden, m.a.W. an den Anschlüssen 132, 134 kann eine Spannung abgegriffen bzw. abgefragt werden

Der Verlauf des magnetischen Flusses durch den Kern 20, bei bestromter Spule 30, wird in schematischer Form in Fig. 3 angedeutet. Wie gezeigt, verlaufen die magnetischen Feldlinien in den weichmagnetischen Blechen 27, 29 eher parallel zu deren Oberflächen, eine Induktion von Sekundärspannungen kann also in diesen Blechen nur in geringem Maße stattfinden.

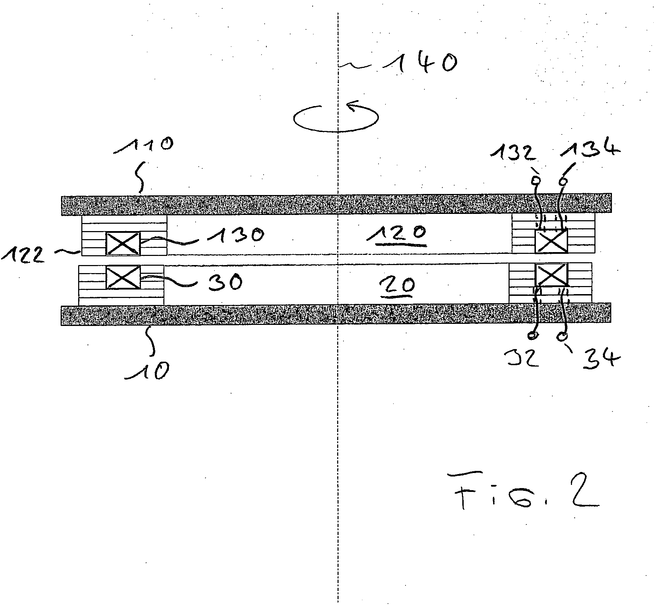

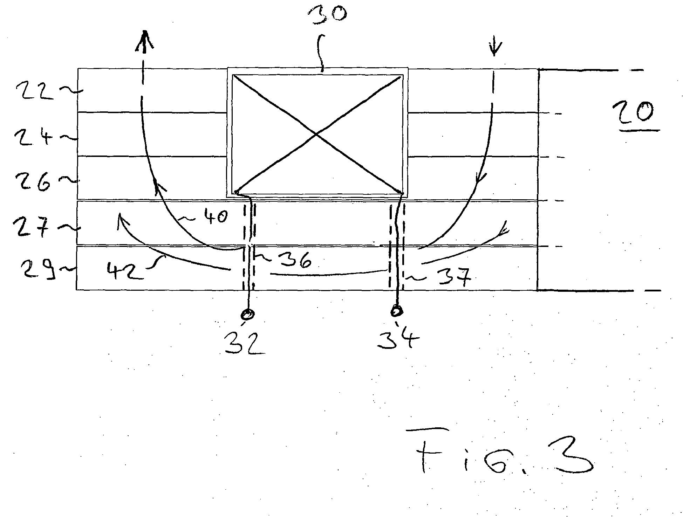

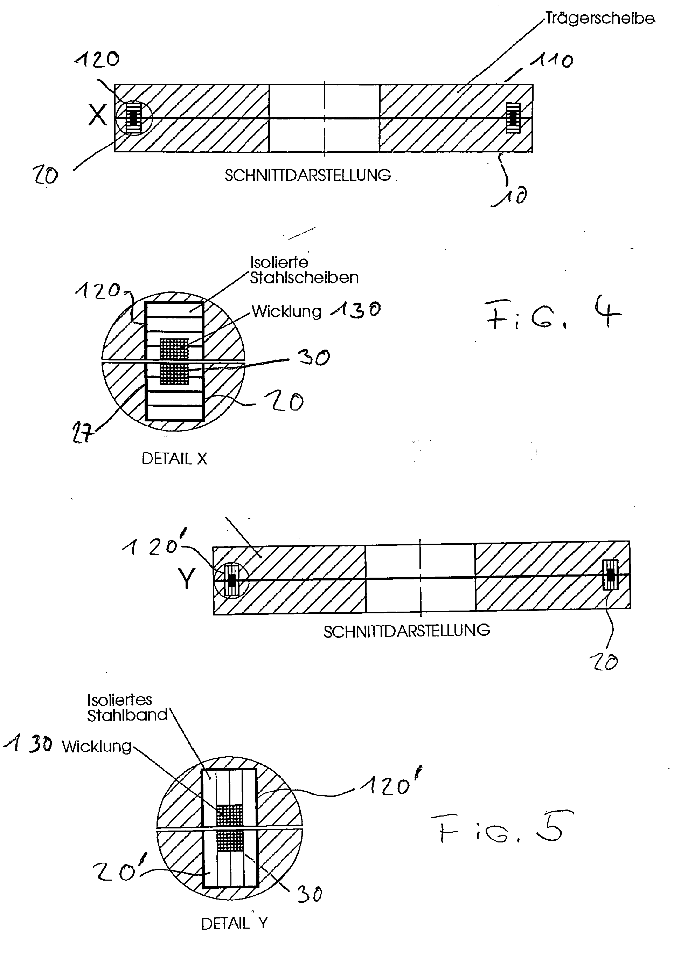

Die Anordnung einer erfindungsgemäßen Vorrichtung gemäß Fig. 4 ist im Prinzip vergleichbar mit der Anordnung gemäß Fig. 2, weist jedoch modifizierte Träger 10, 110 von hohlzylindrischer Form auf. (Anschlüsse zu Spulen 30, 130 sind in Fig. 4 und 5 nicht gezeigt).

Die Anordnung nach Fig. 5 entspricht im Wesentlichen der Anordnung aus Fig. 4, allerdings sind anstelle von isolierten Stahlscheiben oder -ringen nunmehr isolierte Stahlbänder (Weicheisenbänder) von hohlzylindrischer Gestalt für die Kerne 20', 120' vorgesehen, wie dies deutlich im Detail Y der Fig. 5 gezeigt wird.

In einer weiteren Ausgestaltung der Erfindung werden sogar anstelle von Stahlscheiben oder Stahlbändern für die Kerne 20, 20', 120, 120' solche aus massivem Weicheisen vorgesehen, die zur Aufnahme der Spulen zweckmäßigerweise mit einer Nut ausgestattet sind. Es zeigt sich überraschend, dass der Nachteil der konstruktionsbedingten Wirbelstromverluste weit weniger schwer wiegt als die Vorteile der vergleichsweise einfachen und kostengünstigen Herstellungsweise solcher weichmagnetischer Kerne aus metallischem Masivmaterial, im Vergleich zu bekannten Vorrichtungen mit Ferritkernen oder anderem gesintertem Material.

Die letztgenannte Ausführungsform der Erfindung zeichnet sich also dadurch aus, dass
- ein erster, feststehender ferromagetischen Kern bestehend aus ferromagnetischem, ringförmigem, in Radialrichtung ungeschlitzten und mit einer in axiale Richtung zeigenden Nut versehenem Massivmaterial aus Weicheisen vorhanden ist, weiterhin
- ein zweiter, zum ersten Kern (20) um eine Figurenachse (140) verdrehbar angeordneter Kern vorhanden ist, welcher aus ferromagnetischem, ringförmigem, in Radialrichtung ungeschlitzten und mit einer in axiale Richtung zeigenden Nut versehenem Massivmaterial aus Weicheisen besteht, sowie
- eine erste, mittels Anschlüssen (32, 34) bestrombare erste Spule (30) und eine zweite, mittels Anschlüssen (132, 134) bestrom- oder abfragbare zweiten Spule (130) vorhanden ist.

Gemäß der Erfindung ist es vorteilhaft, in den Kernen 20, 120 nicht nur ein sich gegenüberstehendes Spulenpaar vorzusehen, sondern eine Mehrzahl an solchen, in radialer Richtung gestaffelten Spulenpaare. In einer solchen Anordnung findet Energie- oder Informationsübertragung im wesentlichen nur zwischen solchen Spulen statt, die sich unmitelbar gegenüberstehen. Eine Übertragung von verschiedenen Digitaldaten neben diversen Leistungsübertragungen ist auf diese Weise sehr gut möglich.

## Patentansprüche

1. Vorrichtung zur Übertragung von elektrischer Energie oder Information,
**gekennzeichnet durch**
- einen ersten, feststehenden ferromagetischen Kern (20) bestehend aus ferromagnetischen, ungeschlitzten und geschichteten Kern-Blechen (22, 24, 26, 27, 29)
- einen zweiten, zum ersten Kern (20) um eine Figurenachse (140) verdrehbar angeordneten Kern (120) bestehend aus ferromagnetischen, ungeschlitzten und geschichteten Kern-Blechen (122 etc.)
- einer ersten, mittels Anschlüssen (32, 34) bestrombaren ersten Spule (30) und einer zweiten, mittels Anschlüssen (132, 134) bestrom- oder abfragbaren zweiten Spule (130),
wobei die Kerne (20, 120) von hohlzylindrischer Gestalt sind, sich mit je einer Hohlzylinder-Stirnseite in geringem Abstand gegenüberstehen und hohlzylindrische Aussparungen zur Aufnahme mindestens je einer der genannten Spulen (30, 130) aufweisen.

2. Vorrichtung zur Übertragung von elektrischer Energie oder Information nach Anspruch 1,
wobei die Kern-Bleche (22, 24, 26, 27, 29, 122) satzweise geschichtet sind und entweder von kreisringförmiger oder von hohlzylindrischer Form sind.

3. Vorrichtung nach Anspruch 2, wobei die Kern-Bleche unter Verwendung von Isolier-Material satzweise geschichtet sind.

4. Vorrichtung zur Übertragung von elektrischer Energie oder Information,
**gekennzeichnet durch**
- einen ersten, feststehenden ferromagetischen Kern (20) bestehend aus ferromagnetischem, ringförmigem, in Radialrichtung ungeschlitzten und mit einer in axiale Richtung zeigendenNut versehenem Massivmaterial aus Weicheisen
- einen zweiten, zum ersten Kern (20) um eine Figurenachse (140) verdrehbar angeordneten Kern (120) bestehend aus ferromagnetischen, ringförmigem, in Radialrichtung ungeschlitzten und mit einer in axiale Richtung zeigenden Nut versehenem Massivmaterial aus Weicheisen
- einer ersten, mittels Anschlüssen (32, 34) bestrombaren ersten Spule (30) und einer zweiten, mittels Anschlüssen (132, 134) bestrom- oder abfragbaren zweiten Spule (130).
